# EUROPEAN PATENT APPLICATION

(11) **EP 4 186 591 A1**
(43) Date of publication of application: **31.05.2023**
(21) Application number: 21211413.6
(22) Date of filing: 30.11.2021
(51) Int. Cl.: B01J 20/30, B01J 20/26, B01J 20/28, B01D 53/04, B01J 39/05, B01J 39/20, B01J 41/07, B01J 41/14, B01J 43/00, B01J 47/014, B01J 47/018

(54) **A SORBENT GRANULATE FOR SEPARATION OF CARBON DIOXIDE FROM A FLUID MIXTURE, AND A METHOD OF PRODUCING THEREOF**

(71) Applicant: VITO NV, 2400 Mol (BE)
(72) Inventor: DE VOS, Yoran Michel Marc Arielle, B-2400 Mol (BE); QUAGHEBEUR, Mieke Cornelia J., B-2400 Mol (BE); ROMBOUTS, Marleen, B-2400 Mol (BE)
(74) Representative: V.O.

(57) **Abstract**

The invention relates to a method of producing sorbent granulates for separation of carbon dioxide from a fluid mixture, the method comprising providing an amine functionalized sorbent material having amine groups chemically bound to the sorbent material surface which is ground into a powder; and granulating the powder with added binder into sorbent granulates, wherein the sorbent granulates have a diameter in a range of 0.1-25 millimeter. The invention also relates to said produced sorbent granulate.

## Description

### FIELD OF THE INVENTION

The invention relates to a method of producing sorbent granulates for separation of carbon dioxide from a carbon dioxide containing fluid mixture. The invention also relates to a sorbent granulate for separation of carbon dioxide from a fluid mixture. Additionally, the invention relates to a packed bed of sorbent granulate. Furthermore, the invention relates to a method for removing carbon dioxide from a carbon dioxide containing fluid mixture, in particular from a carbon dioxide containing gas stream. Further, the invention relates to a use of the sorbent granulate in a process for separation of carbon dioxide from a fluid mixture.

### BACKGROUND TO THE INVENTION

Sorbent granulates are employed for separation of carbon dioxide from fluid mixtures. The mixture may for instance be a gas stream, e.g. ambient air, industrial gas flow, etc. The granulates may have various dimensions (e.g. around 1 millimeter in diameter) and can be integrated in a packed bed. The packed bed may have a large volume of granulate packed together. The carbon dioxide containing fluid or gas stream can be guided through the packed bed.

The granules or particles of the granulate may have various three-dimensional structural shapes. For instance, the granules may have a spheroid shape. In some examples, the granules are substantially sphere shaped. The granules may be heated for releasing the captured carbon dioxide. Direct or indirect heating is possible. In some examples indirect heating may be used by containing the sorbent granulate with a heated fluid, such as hot water, for facilitating subsequent release of captured carbon dioxide. Other ways of heating the granulates, for example direct heating, is also possible. For instance, an electric heating, infrared heating, resistive heating, inductive heating, microwave heating, etc., may be employed. In some examples, the heating can be combined with subjecting the carbon dioxide loaded sorbent to an under pressure (e.g. vacuum) in order to speed up the release process of the carbon dioxide. The released carbon dioxide can be collected.

Typically, an adsorption step is carried out in which the gas stream, is brought into contact with the one or more packed beds of granulates. The gas stream can flow through the packed bed and contact the granules.

It is desired to have a relatively high carbon dioxide adsorption capacity achieved by the sorbent packed bed, preferably achieved in a relatively short time frame. Additionally, is desired to have a smaller pressure drop over the packed bed. By having a relatively low pressure drop, the energy efficiency of the process can be enhanced. Typically, the fluid mixture or gas stream (e.g. in air) from which carbon dioxide is to be removed, contains only a limited amount of carbon dioxide, so that a relatively large volume of fluid has to flow through the packed bed. This is often challenging for a packed bed with a high pressure drop. Therefore, the pressure drop is often an important limiting factor which needs to be addressed adequately in the design of the packed bed.

### SUMMARY OF THE INVENTION

It is an object of the invention to provide for a method and a system that obviates at least one of the above mentioned drawbacks.

Additionally or alternatively, it is an object of the invention to improve the production of sorbent granulates.

Additionally or alternatively, it is an object of the invention to provide for a method of producing sorbent granulates which can improve at least one of an adsorption capacity or kinetics when used for separation of carbon dioxide from a fluid mixture.

Additionally or alternatively, it is an object of the invention to provide for granulates which can result in an adequate pressure drop over a packed bed and/or fluidized bed of said granulates.

Additionally or alternatively, it is an object of the invention to provide for sorbent granulates which can improve the performance of separation of carbon dioxide from a fluid mixture, in particular a gas stream, when used in a packed bed.

Thereto, the invention provides for a method of producing sorbent granulates usable for separation of carbon dioxide from a carbon dioxide containing fluid mixture, the method comprising: providing an amine functionalized sorbent material having amine groups chemically bound to the sorbent material surface; grinding the sorbent material into a powder; and granulating the powder with added binder into sorbent granulates, wherein the sorbent granulates have a diameter in a range of 0.1-25 millimeter.

The sorbent particles may be ground and then reconstituted (cf. granulation) to a desired size. The size of the granulates may result in a limited pressure drop over a bed of such granulates when a stream of fluid mixture is guided therethrough. Larger granulates may result in lower pressure drops over such bed of granulates. The granulates are formed using amine functionalized sorbent material of a finer size. By using the amine functionalized sorbent material powder with fine powder for forming the granulates, a sorbent granulate can be obtained with a bimodal pore distribution, comprising a set of pores with a smaller pore size and a set of pores with a larger pore size. This bimodal pore size has the effect that on the one hand accessibility of the surface of the sorbent material may be improved, and on the other hand that over-all kinetics may be improved. Reconstituting the ground, fine powder of sorbent material into granulates results in a larger interior surfaces of the sorbent material being accessible to the fluid mixture, and to the carbon dioxide present therein. With other words, the fluid mixture can access a larger part of the interior of the formed granulates, and thus the amine functional groups present on the sorption surface of the sorbent material are more accessible. As a result, under certain flow conditions of the fluid mixture, the adsorption capacity for carbon dioxide can be increased. Furthermore, it has been observed that the adsorption capacity does not decrease significantly due to granulation.

The adsorption kinetics of a granulate achievable by granulating the powder with added binder into sorbent granulates, for separation of carbon dioxide from the fluid mixture can be significantly enhanced by the method according to the disclosure. The presence of a bimodal pore distribution, comprising a set of pores with a larger pore size may facilitate penetration of the carbon dioxide containing fluid into the granules and improve accessibility of the set of pores with smaller pore size.

Additionally, a reduction of the adsorption capacity (i.e. loss of adsorption capacity) can be effectively limited. With other words, the method enables ensuring that the adsorption kinetics is accelerated whilst retaining the adsorption capacity. In this way, a significant synergistic beneficial effect is achieved.

The amine functionalized sorbent material can be a non-impregnated material, or in other words the sorbent material is amine functionalized with amine groups chemically bound to the material. The chemical functionalization may result in a higher chemical and/or thermal stability (e.g. less leaching), e.g. at higher temperature and/or in presence of water (e.g. vapor). Additionally or alternatively, the effects of a detrimental shielding of smaller pores by an impregnation layer may be prevented.

It will be appreciated that the term "amine functionalized" is to be understood as having amine groups chemically bound to the sorbent material, instead of impregnating the material and/or providing a coating. For example, a material may be provided which has amine functionalized groups. The material may for instance be a polymer with chemically bound amine groups. The material may also be a silicon material to which hydroxy functional groups are bound. Various other materials may also be functionalized with amines.

The method according to the disclosure may result in a limited adsorption capacity reduction of the granulates compared to the initial amine functionalized sorbent material. In various examples, the capacity reduction was smaller than 10 percent, in some cases even smaller than 5 percent.

Optionally, the formed granulates have a carbon dioxide adsorption capacity which is at least 90 percent of the carbon dioxide adsorption capacity of the initial amine functionalized sorbent material which is used to reconstitute the sorbent granulate of this invention

The fluid mixture may be a gas mixture comprising a.o. carbon dioxide. The fluid mixture may for example further include the conventional components such as water vapor, nitrogen gas, solid particles such as for instance dust particles, etc.

The size of the granulates obtained by means of reconstitution of ground sorbent material may play an important role for the pressure drop over the packed bed of granulates. The granulates may be suitable for use in e.g. a packed bed and/or a fluidized bed, or any other type of bed considered suitable by the skilled person.

Optionally, sorbent granulates are formed which have a diameter in range of 2-4 millimeter. Granulates with such sizes used in a packed bed may result in limited/acceptable pressure drops. Larger granulates in a packed bed may result in lower pressure drops over said packed bed. However, a trade-off between an acceptable pressure drop and sufficient accessibility of the sorbent material in the packed bed can be taken into account.

The ground sorbent material in powder form is granulated by means of a binder. A mixing unit can be used in which a binder is added to the sorbent material powder during mixing. Water or any other suitable solvent may also be added. Under the influence of rotation and shear the powder particles can adhere to each other forming larger granules, for instance spheroidal granules. The water or another solvent may be removed. The binder may ensure that the granulate is sufficiently structurally stable. Other additives may be optionally added.

Optionally, the sorbent granulates obtained by granulating the ground amine functionalized sorbent material with added binder are dried. Optionally, the dried sorbent granulates are subsequently sieved in order to obtain granulates with a desired characteristic length or diameter. For instance, a sieving arrangement may be used for obtaining sorbent granulates having a diameter in the range of 2-4 millimeter. Since the granulates may have a spheroidal shape, the diameter may be considered as a length along a principal axis of the spheroidal shape.

Optionally, sorbent granulates are formed which have a diameter in range of 0.1-0.5 millimeter. Granulates with such sizes used in a fluidised bed may result in reduced/limited mass transfer limitations. Optionally, the amine functionalized resin is porous and has, prior to grinding, pores having sizes in a first range, and wherein the formed sorbent granulates have pores having sizes in the first range and pores having sizes in a second range, wherein sizes in the second range are larger than sizes in the first range.

As a result of the granulation of the powder, a bimodal pore system can be obtained in the granulates. Advantageously, the accessibility of the active material of the granulates (cf. also interior of the granulates) can be improved.

Impregnation of the sorbent material prior to grounding it into a powder may be prevented. Performing impregnation steps can have adverse effects on the performance of the granulates. The impregnation is typically achieved to a certain level, and during grounding/crushing, the portions of the material that have not been fully impregnated may come to the outer surface of the granulates. This may result in less accessibility of the active material. Moreover, using an impregnated sorbent material may result in reduced chemical and/or thermal stability of the formed granulates. According to the disclosure, an amine functionalized sorbent material that is ground into a powder is used, resulting in formed granulates that have improved adsorption capacity and/or adsorption kinetics. The larger pores in the granulates can speed up the adsorption kinetics so that fluid can reach the inside of the granulates faster and/or more efficiently. Moreover, larger granulates may be used in the packed bed of granulates whilst maintaining an adequate adsorption capacity and/or adsorption kinetics.

Optionally, at at least an outer surface of the sorbent granulates, a first set of pores with sizes in the first range and a second set of pores with sizes in the second range are formed.

Optionally, sizes in the second range are at least ten times larger than sizes in the first range, preferably at least ten times larger, more preferably at least thirty times larger.

The grinding of the amine functionalized sorbent material into a powder and subsequent granulation of the powder using a binder results in produced granulates with a different porosity. The obtained porosity can result in improved adsorption characteristics. For example, the amine functionalized sorbent material may have pores having a size of around 25 nanometer. This may prevent effective diffusion of carbon dioxide into the small pores. By performing the grinding step to a powder, and subsequent granulation step, a bimodal pore size is obtained, wherein a first set of pores have a smaller size and a second set of pores have a larger size, such that adsorption of carbon dioxide can be improved.

By using the amine functionalised sorbent material (non-impregnated) that has been ground into a powder, a reduction of adsorption capacity can be limited or even avoided. Moreover, by performing the granulation step, the adsorption kinetics can be improved. In some examples, the adsorption capacity remains approximately the same after granulation, or only a limited reduction is obtained, for example less than 20 percent, more preferably less than 10 percent, even more preferably less than 5 percent.

Optionally, the first range is between 15-50 nanometer, preferably between 15-35 nanometer, and the second range is between 0.2-5 micrometer.

In contrast to the invention, impregnation may have detrimental effects on the adsorption capacity and/or adsorption kinetics. The impregnation may cover at least a portion of the pores of the sorbent material, which can significantly decrease the carbon dioxide adsorption capacity. By providing a (non-impregnated) amine functionalized sorbent material with amine groups chemically bound to the sorbent material surface which is ground into a powder, the loss of carbon dioxide adsorption capacity by impregnation can be effectively avoided. It can be effectively prevented that pores are shielded as a result of impregnation.

Optionally, the powder has particles having an average size in a range between 0.1-250 micrometer, preferably 1-200 micrometer, more preferably 5-150 micrometer, even more preferably 20-100 micrometer.

Advantageously, by using such powder, the formed granulates may provide for significantly improved adsorption kinetics. Using a powder having particles with an average size larger than 500 micrometer, in some examples larger than 300 micrometer, may have a detrimental effect on the strength of the formed granulates. In some cases, this effect may be mitigated by addition of one or more additive during the granulation process, and/or selecting a different kind of binder.

Optionally, the amine functionalized resin is a crosslinked, macroporous, polystyrene based resin, preferably a benzyl amine-co-polystrene based resin.

The amine functionalized resin may be non-impregnated. During impregnation, the smaller pores may be lost, and that may affect a large part of the active surface.

Optionally, the benzyl amine-co-polystrene based resin is functionalized with primary amine groups produced by a phthalimide addition process (e.g. for Lewatite).

It will be appreciated that the amine functionalization of ion-exchange resins could also be performed by a chloromethylation process.

Optionally, the binder is a polymer binder.

A polymer binder may significantly improve the structural stability and/or strength of the granulates. This may be of particular importance when the granulates are used in a packed bed. It can be prevented that the granulates break or are crushed (i.e. disintegration) when placed in the packed bed and/or during use (e.g. due to vibrations).

Various polymer binders can be used, such as for instance PVC based binders.

Optionally, the binder comprises aqueous polymer dispersions with film forming properties, such as acrylic, acrylic-styrene or vinylacetate dispersions.

According to an aspect, the invention provides for a system for carrying out the method according to the disclosure. In some examples, the system comprises a device which comprises a grinding unit for grinding a amine functionalized sorbent material into a powder, and granulation unit arranged to subsequently granulate the powder with added binder into sorbent granulates. In some examples, the system further includes a filtering/sieving unit for obtaining the sorbent granulates having a diameter in a range of 0.1-25 millimeter.

Optionally, one or more additives are added during the granulation process. For instance, a strength additive may be added for increasing the strength and structural integrity of the formed granulates.

Optionally, the granulation is performed such as to form spheroid shaped granulates. In some examples, the granulates are substantially spherical shaped. The shape and dimensions may have a great impact on packing of said granulates in a packed bed of granulates.

According to an aspect, the invention provides for a sorbent granulate for separation of carbon dioxide from a fluid mixture, the sorbent granulate comprising ground amine functionalized sorbent material having amine groups chemically bound to the sorbent material surface, wherein the sorbent material is interconnected by a binder, wherein the sorbent granulate has a diameter in a range of 0.1-25 millimeter, and wherein the granulate has pores having sizes in a first range and pores having sizes in a second range, wherein sizes in the second range are at least ten times larger than sizes in the first range.

It will be appreciated that the amine functionalized sorbent material has amine groups chemically bound to its surface. Hence, the sorbent material is not impregnated.

The granulates may have a bimodal or two-range porosity. Such a bimodal pore size can result in significantly enhanced adsorption kinetics.

Advantageously, both the adsorption capacity and the adsorption kinetics are improved for the sorbent granulates according to the invention. The granulates may be made bigger, whilst still providing beneficial adsorption capacity and kinetics.

Optionally, the granulate comprises: the sorbent material in an amount in a range of 85-99 dry weight percentage, preferably 90-98 dry weight percentage, more preferably 92-75.5 dry weight percentage, even more preferably 93-96 dry weight percentage; and/or the binder in an amount in a range of 1-15 dry weight percentage, preferably 2-10 dry weight percentage, more preferably 2.5-8 dry weight percentage, even more preferably 4-7 dry weight percentage. Herein, the dry weight percentage is expressed with respect to the total weight of the sorbent granulate.

In some examples, a binder in an amount of approximately 6.5 dry weight percentage is used. In some examples, an amine functionalized sorbent material in an amount of above 94 dry weight percentage is used. Advantageously, a relatively large amount of amine functionalized sorbent material can be used.

Various types of binders may be used. The binder may for example be solvent-based or water-based.

Optionally, a binder is used which requires an elevated temperature for binding smaller than 150 degrees Celsius, more preferably smaller than 120 degrees Celsius, even more preferably smaller than 100 degrees Celsius. Such relatively low temperature binders may reduce the risk of loss of carbon dioxide adsorption capacity resulting from too high temperatures. A functional degradation of the sorbent material as a result of too high elevated temperatures may be effectively prevented.

Optionally the sorbent material is a polymer sorbent material.

Optionally, the sorbent material is a curable resin. Optionally, the sorbent material is a multi-component curable resin.

According to an aspect, the invention provides for a packed bed of sorbent granulates which are obtained by performing the method according to the disclosure.

Increasing the size of the granulates may result in a lower pressure drop over a packed bed of said granulates. However, as a result of the increased size a detrimental effect on the adsorption kinetics may occur. Advantageously, the sorbent granulates can have an improved performance for capturing carbon dioxide from a fluid mixture or a gas stream.

Optionally, the packed bed has a thickness between 25 to 500 millimeter, preferably 30 to 100 millimeter.

According to an aspect, the invention provides for a method for removing carbon dioxide from a carbon dioxide containing fluid, preferably a carbon dioxide containing gas stream, wherein sorbent granulates obtained by performing the method according to the disclosure are contacted with a gas or gaseous stream comprising carbon dioxide resulting in the adsorption of a portion of the carbon dioxide from the gas or gaseous stream and, thereby, reducing the amount of carbon dioxide in the gas or gaseous stream.

Advantageously, the sorbent granulates can have a higher carbon dioxide adsorption rate.

Optionally, the gas stream is a stream of air.

A carbon dioxide adsorption process can be carried out in different ways. In some examples, a packed bed of stationary granules through which a fluid flow, in particular a gas flow is guided is used. In some examples, finer granulates are used which can be fluidized in a fluidised bed. The carbon dioxide containing fluid or the carbon dioxide containing gas mixture can be guided through the fluidized bed.

Optionally, the carbon dioxide containing gas stream is an industrial gas and/or industrial gas stream, preferably with a CO2 partial pressure of above 0.5 kPa.

Optionally, the carbon dioxide containing gas stream is a residential gas stream with an elevated CO₂ concentration..

According to an aspect, the invention provides for a use of the sorbent granulate according to the disclosure in a process for separation of carbon dioxide from a fluid mixture.

The amine functionalized resin is non-impregnated and has amine groups chemically bound to its surface. The granulation process results in granulates which have smaller pores and larger pores (bimodal pore system), which enables a better adsorption of carbon dioxide. The accessibility of functional groups of active material in the granulates can be improved, and the adsorption kinetics can be enhanced. The larger pores are formed as a result of the granulation process and allow the interior of the granulates to be more accessible by fluid.

According to an aspect, the invention relates to a flow reactor with a packed bed having multiple granulates according to the disclosure. Optionally the flow reactor having a plurality of laterally placed packed beds, wherein a gas flow is guided through each of the laterally placed packed beds.

The sorbent material may be a resin material to which amino groups are covalently bound. The amino groups may have a high affinity for carbon dioxide. Such sorbent material may only require a low heating/conditioning temperature for subsequent desorption of the captured carbon dioxide. Moreover, the presence of water in the fluid mixture (e.g. gas stream such as air) has no adverse effect on the carbon dioxide adsorption by the obtained sorbent granulate.

Optionally, the amine functionalized sorbent material is a benzyne amine-co-polystyrene resin which is ground into a powder and granulated with added binder in order to form the sorbent granulates, resulting in more variation in pore sizes.

It will be appreciated that the granulation enables the formation of additional pores in the formed granulates, such that the inner surface of the formed granulates becomes better accessible. Extrusion and/or cutting instead of granulation may not produce spheroid shaped particles. Contrary to granulation, cylindrical or cuboid particles may be formed, which make the particles less suitable for packing in a packed bed and for fluidisation in a fluidised bed. Granulation according to the method of the disclosure may be carried out in different ways. For instance, granulation may be carried out by using a mixer and mixing the powdered amine functionalized sorbent material with a binder and one or more optional additives. Optionally, the granulation process is performed by using at least 90 percent amine functionalized sorbent material, and below 10 percent binder. The amine functionalized sorbent material may be an amine functionalized resin that is non-impregnated, and which is subsequently ground in order to form a powder which is used during the granulation process.

It will be appreciated that any of the aspects, features and options described in view of the method apply equally to the system and/or device for carrying out said method, the sorbent granulate, the packed bed, the method for removing carbon dioxide from a gas stream and the described use of the sorbent granulate. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a granulate;
Fig. 2 shows a schematic diagram of an embodiment of a process; and
Fig. 3 shows a schematic diagram of a graph.

### DETAILED DESCRIPTION

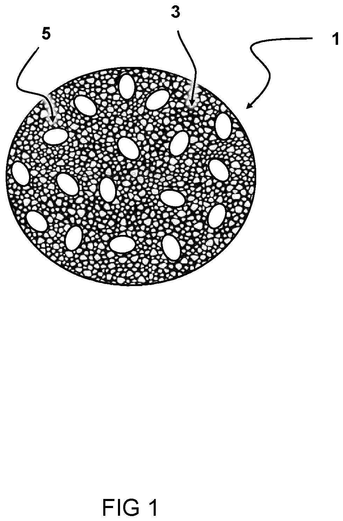

Fig. 1 shows a sorbent granulate 1 for separation of carbon dioxide from a fluid mixture. The sorbent granulate 1 can be manufactured by performing the method according to the disclosure. A single granulate is shown. In some examples, multiple such granulates may be packed in a packed bed.

The sorbent granulate 1 comprising ground amine functionalized sorbent material having amine groups chemically bound to the sorbent material surface, wherein the sorbent material is interconnected by a binder. The sorbent granulate has a diameter in a range of 0.1-25 millimeter, and wherein the granulate has first pores 3 having sizes in a first range and second pores 5 having sizes in a second range, wherein sizes in the second range are at least ten times larger than sizes in the first range.

Smaller granulates may result in better kinetics and thus faster reactions. However, as a result a higher air resistance is obtained when the granulates are used in a packed bed of granulates, thereby resulting in a higher pressure drop over the packed bed. Thus more energy is needed for achieving a separation of carbon dioxide from a fluid mixture such as a gas stream.

By improving the kinetics, shorter cycles, in which the granulates are exposed to a gas stream, can be obtained and the separation process can be made faster. It is desired to keep the cycles as short as possible, so that more cycles can be performed over a time span (e.g. hour, day, etc.).

The adsorption kinetics can differ from the desorption kinetics. The desorption kinetics may be mainly determined by the post-treatment process (e.g. heating, vacuum, conditioning of the surrounding fluid, etc.). The heating of the packed bed may be an important aspect for the rate at which desorption proceeds. This partly determines the length of the cycle.

The sorbent granulates according to the disclosure can improve the adsorption capacity. Additionally or alternatively, the pressure drop in a packed bed of the sorbent granulates according to the disclosure can be reduced, thus improving the energy efficiency. Advantageously, the sorbent granulates may be able to effectively adsorb carbon dioxide from a fluid mixture with a relatively low concentration of carbon dioxide therein, for instance a concentration of 400 ppm or even lower.

The amine functionalized sorbent material with material having amine groups chemically bound to the sorbent material surface may be an ionic resin material. For example, spherical beads of the amine functionalized sorbent material may be provided which is subsequently ground into a powder. The amine functionalized sorbent may be a polymer material with amino functionalities that can ensure selective binding with carbon dioxide, even with relatively low concentrations of carbon dioxide present in the fluid mixture. The amine functionalized sorbent may have mesopores (e.g. size of approx. 25 nanometer).

The amine functionalized sorbent material may be commercially available. For example, Lewatite is an amine functionalized sorbent material which is commercially available as an ionic resin usable for water purification.

Advantageously, the amine functionalized sorbent material can release captured carbon dioxide requiring relatively low amount of energy (e.g. heating). For instance, the captured carbon dioxide may be effectively released by heating to a temperature remaining below 100 degrees Celsius. In contrast, other materials such as a zeolite material may typically requires heating temperatures of 200 degrees Celsius or even more.

The amine functionalized sorbent material (cf. covalent bound) has important advantages with respect to an impregnated material. The use of an amine functionalized sorbent material can effectively prevent that amines are released during the desorption step. Thus, the amine functionalized sorbent material is more stable and it is less likely that the amines are released during use, even when brought in contact with water (e.g. present in the gas flow). For example, when an impregnated material is used, the amines may be released during desorption.

In some examples, the granulation is performed by utilizing a granulation arrangement. In some examples, the granulation equipment is a high shear granulation device. This provides an easy way to obtain granulates of a desired size with a bimodal pore distribution. As water evaporates from the granulate (conditioning/drying process), the formed granulates may shrink, and a part of the volume where moisture used to be will remain empty, resulting in relatively large pores in the granulates. It has been observed, that a granulation process using the amine functionalized sorbent material powder and at least one binder results in granulates with an improved pore system. Additionally, the structural stability of the granulates may be improved.

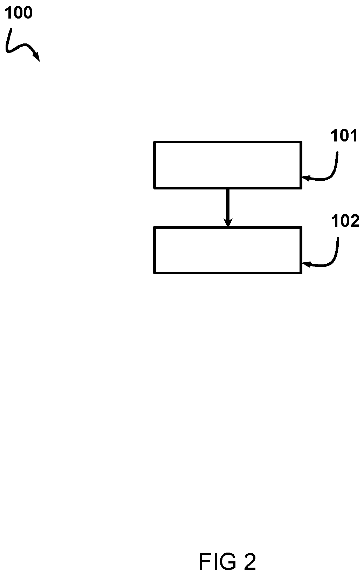

Fig. 2 shows a schematic diagram of an embodiment of a process of producing sorbent granulates usable for separation of carbon dioxide from a fluid mixture. In a first step 101 of the production process, an amine functionalized sorbent material having amine groups chemically bound to the sorbent material surface which is ground into a powder is provided. The powder may for instance be obtained by means of a grinder or crushing device. Optionally, the powder is sieved/filtered in order to have particles with sizes falling in a desired range. In a second step 102, the powder is granulated into sorbent granulates using a binder. The granulation may for instance be performed in a granulation device, such as a mixing device. During the granulation step, optionally, additives may be added to the powder and binder mixture. The granulation is performed such as to obtain sorbent granulates having a diameter in a range of 0.1-25 millimeter. Optionally, a filtering/sieving step is carried out in order to isolate sorbent granulates having said dimensions.

The grinding and/or crushing of the amine functionalized sorbent material into a powder and subsequent granulation for obtaining granulates based on the powder and at least one binder, results in granulates which have beneficial properties. More particularly, the adsorption kinetics can be improved. Additionally or alternatively, the adsorption capacity can be improved. As a result, advantageously, larger granulates/beads may be packed in packed bed, resulting in a limited pressure drop and adequate adsorption kinetics. In some advantageous examples, the granulates obtained by means of the granulation step are sieved/filtered in order to have granulates having a size and/or an average size in a range of 0.1-25 millimeter. These granulates can then be packed in a packed bed which is used for separation of carbon dioxide from a gas stream.

Optionally, the granulation includes employing a high shear mixer. However, various other techniques may be employed for granulation, such as for example a spray drying technique.

Optionally, the amine functionalized sorbent materials is an ion exchange resin, preferably a weakly basic ion exchange resin, more preferably an amine functionalized resin.

Sorbent materials suitable for use in the present invention are for example disclosed in US2019224647A1, US2012228553A1 and US2011088550A1.

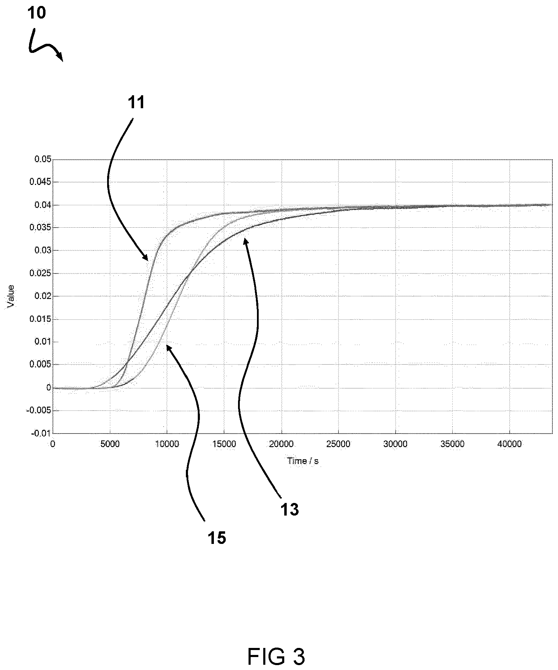

Fig. 3 shows a schematic diagram of a graph 10 of experimental results. In the experiments, a gas stream with a constant amount of carbon dioxide (value 0.04 equals to 400 ppm carbon dioxide) is guided through a packed bed with different types of beads.

Initially, the carbon dioxide in the gas stream is captured efficiently by the amine groups, resulting in a relatively low amount of carbon dioxide at the outlet of the packed bed. However, after a time, the carbon dioxide at the outlet of the packed bed will start to increase since some of the granulates become saturated or due to mass diffusion limitations.

The graph shows an indication of the capacity of the sorbent granulates. An integral of a whole curve indicates how much carbon dioxide the packed bed of granulates can adsorb. This can be normalized to an amount of sorbent material (per gram), cf. mole CO₂ per gram of sorbent material. This value can be seen as a adsorption property of sorbent material of the granulates. Furthermore, ideal kinetics would result in a complete adsorption of the carbon dioxide at the outlet of the packed bed until the sorbent granulates are saturated, which would result in a certain increase of the carbon dioxide at the outlet of the packed bed (cf. step function). However, in reality the curve has varying steepness instead of a step function. The steepness of the curve may be seen as an indication of the adsorption kinetics (i.e. how well is the carbon dioxide adsorbed). More smoothed out curves (cf. less steep curves) are associated to detrimental adsorption kinetics. Various metrics or values can be used for quantifying the steepness of the curves.

The experiments have been performed for different beads. The first curve 11 is obtained by using first beads, the first beads being granulated beads obtained by performing the method according to the disclosure. The second curve 13 is obtained by using second beads, the second beads being commercially available beads having the same size of the first beads. The third curve 15 is obtained by using third beads, the third beads being granulates according to the disclosure which are larger in size than the first and second beads.

Advantageously, the granulates according to the disclosure can result in improved adsorption kinetics (more steep curve), even for larger granulate sizes. Hence, by using the granulates according to the disclosure, the pressure drop over a packed bed can be limited (cf. mainly related to size of granulates), whilst providing a beneficial adsorption kinetics. The improved adsorption kinetics, which is obtained even for relatively large granulates, may be achieved by how the granulates are produced. A bimodal pore distribution can be obtained which can improve the adsorption kinetics despite the larger granulate size.

Advantageously, by means of the granulated beads according to the invention, a larger quantity of carbon dioxide can be captured from a fluid mixture or gas stream in a certain time period. Providing an amine functionalized sorbent material having amine groups chemically bound to the sorbent material surface which is ground into a powder, and subsequent granulation of the obtained powder using a binder for obtaining sorbent granulates with a diameter in a range of 0.1-25 millimeter, yields granulates which have a porous system that makes the amine groups more accessible. A bimodal porous system is obtained with smaller pores which were present in the amine functionalized sorbent material before grinding, and additional larger pores, facilitating carbon dioxide to enter the granulates.

The fine pores in the ground material can thus be substantially retained, and additional larger pores can be obtained in the granulates. The fine pores may for instance have a size around 25 nanometer, and a pore volume of around 270 mm3/mg for an exemplary amine functionalized sorbent material. The larger pores obtained by the granulation step may for instance having a size in a range of 1 to 10 micrometer. These additional larger pores allow the amino groups to be more easily accessible by the gas stream with carbon dioxide therein.

The adsorption capacity has an impact on the cost of the system. For example, if the sorbent granulates are able to adsorb a large quantity of carbon dioxide, a less costly design may be obtained. However, it is also desirable to have a beneficial adsorption kinetics. For example, if the adsorption kinetics of the sorbent granulates is improved, the cycles may be made shorter since the carbon dioxide can more easily be adsorbed. This has impact on the amount of sorbent needed in the sorption setup.

It will be appreciated that various amine functionalized resins can be used.

Optionally, the amine functionalized resin is an ion exchange resin. The ion exchange resin may be a weakly basic ion exchange resin. In some examples, the ion exchange resin is a polystyrene polymer based resin, which is crosslinked via the use of divinylbenze, and is functionalized with primary amine groups including benzylamine and wherein the resin is produced by a phthalimide process. The ion exchange resin may be a weakly basic ion exchange resin, or it may be a polystyrene polymer based resin, which is crosslinked via the use of divinylbenze, and is functionalized with primary amine groups including benzylamine and wherein the resin is produced by a phthalimide process.

In some examples, amine functionalized resin is in the form of bead polymers. The bead polymers may comprise polystyrene polymer resins comprising primary amines and crosslinked via divinylaromatics such as, for example, aminomethylated polystyrene-co-divinylbenzene (i.e., polybenzyl amine-co-divinylbenzene). Furthermore, the amine functionalized resin according to the present disclosure may be monodisperse or heterodisperse and macroporous or gel-types (microporous).

A polymeric ion exchange resin may be produced from monovinylaromatic unsaturated compounds such as styrene, vinyltoluene, ethylstyrene, alpha-methylstyrene, chlorostyrene or chloromethylstyrene. Polyvinylaromatic compounds (crosslinkers) used include divinyl-bearing aliphatic or aromatic compounds. For example, use is made of divinylbenzene, divinyltoluene, trivinylbenzene, ethylene glycol dimethacrylate, trimethylol propane trimethacrylate, hexa-1,5-diene, octa-1,7-diene, 2,5-dimethyl-1,5-hexadiene and also divinyl ether.

In addition to the use of aromatic monomers as the starting material for the polymeric ion exchange resin (for example, vinyl and vinylidene derivatives of benzene and of naphthalene (vinylnaphthalene, vinyltoluene, ethylstyrene, alphamethyl-styrene, chlorostyrenes, and styrene), various non-aromatic vinyl and vinylidene compounds may also be employed. For example, acrylic acid, methacrylic acid, C1-C8 alkyl acrylates, C8 alkyl methacrylates, acrylonitrile, methacrylonitrile, acrylamide, methacrylamide, vinyl chloride, vinylidene chloride, and vinyl acetate.

The amine functionalized resin may be an ion exchange resin which utilizes is a crosslinked, weakly basic, monodisperse, macroporous, spherical, anion exchange polystyrene based resin being functionalized with primary amine groups produced by the phthalimide addition process, for example that which is commercially available from LANXESS Deutschland GmbH under the brand name LEWATIT^{®} VP OC1065.

In some examples, the resin includes polyethylenimine (PEI); aminopropyltrimethoxysilane; polyethyleneimine-trimethoxysilane; amide or amine containing polymers including nylon, polyurethane, polyvinylamine, or melamine; and combinations thereof.

In some examples, the resin includes polybisphenol-A-carbonate, poly(ethylene terephthalate), polystyrene, poly(methyl methacrylate), poly(vinyl acetate), poly(vinyl chloride), polytetrafluoroethylene, polysulfone, polyether sulfone, poly(vinylidene fluoride), styrene/butyl acrylate/methacrylic acid terpolymer, and poly(vinylidene fluoride-cohexafluoropropylene).

In some examples, the ion exchange resin can be anionic, cationic or amphoteric.

In some examples, the amine functionalized resin is a particulate resin. The resin may include gel and macroporous ion-exchange resins such as sulfonated polystyrene-divinylbenzene and aminated polystyrene-divinylbenzene either in pure form or in mixtures (Type I, Type II or Type III) such as those available under the trademark DOWEX from the Dow Chemical Company; and; chromatography resins; bifunctional ion-exchange resins such as ion retardation resins (Biord AG11A8) or ion-exchange resins containing both sulfonate and quaternary amine functionality, sulfonated phenolic resin, polystyrene phosphoric acid or iminodiacetic acid resins, aminated acrylic or methacrylic resins, epoxy polyamine resins, aminoethyl cellulose or the like.

It will be appreciated that various binders can be used during granulation.

Optionally, the binder is an organic low temperature binder.

For example, water based polymer emulsion or dispersion or a thermosetting resins (and adhesives) may be used. An epoxy resin with aliphatic primary amine cross linking agent can cure the polymer at room temperature. Unsaturated polyester resin with methylethylketone can be used as the initiator.

Optionally, the organic binder is selected from low temperature curing acrylic resin, polyester resin, silicones; polyacrylics; polyvinylalcohols; polyoxyethylenes; polyelectrolytes; and polysaccharides. Other materials such as polyurethane may also be employed. Examples of polymeric binders are PVA, PVB and PEG.

Optionally, the water dispersible binder comprises a crosslinkable group, also referred to as a functional group or a curable group. Such a crosslinkable group may be selected from a hydroxyl group, a carboxyl group, an amino group, a glycidyl group, a silyl group, a silanate group, an epoxy group, a 1,3-dicarbonyl group (e.g. aceto acetoxy methacrylate of diacetone acrylamide), or an isocyanate group. Among these, a hydroxyl group is particularly preferred.

Optionally, the binder is water soluble or water dispersible. The binder may be selected from a polyolefin, a polyurethane (PU) based polymer, a polyvinyl alcohol (PVA), a polyacrylic (acrylic resin) and a polyester.

Example of a polyurethane based binder is Incorez W835/494, commercially available from Incorez. Examples of polyurethane/acrylic hybrid resins are Incorez W2205, commercially available from INCOREZ; Hybridur 870 and Hybridur 878, commercially available from Air Products, EH3070E and EH1050, commercially available from EOC Belgium. Examples of acrylic resin are JURYMER ET-410 and SEK-301, commercially available from Nihon Junyaku; Encor 2171, commercially available from ARKEMA; Luhydran S945T, Joncryl OH 8312 and Joncryl OH 8313, commercially available from BASF; Neocryl XK110, commercially available from DSM; and Setaqua 510, commercially available from Nuplex, Optapix AC available from Zschimmer-Schwarz.

Examples of a composite resin of acrylic and silicone are CERANATE WSA 1060, WSA 1070 commercially available from DIC Corporation; and H7620, H7630 and H76S0 commercially available from Asahi Kasei Corporation.

Optionally, the binder is polyvinylalcohol based, for example commercially available under the name Optapix PA.

Optionally, the binder is not water soluble. In this way, the stability of the granulates may be improved. Leaching for example due to the presence of water (vapor) and/or at higher temperatures may be effectively prevented.

It will be appreciated that the sorbent granulates and the methods of the invention may be employed for various applications. For example, the areas may be broadly divided into energy production and industrial emissions from chemical and materials processes. Regarding energy production there is contemplated herein the removal of carbon dioxide found in fuel gas produced from electricity generation (for example, steam boilers and combined cycle gas turbines) and steam production for industrial purposes (for example, steam heat and steam turbine drives). Large volumes of hydrocarbon fuel sources, such as coal, petroleum liquids and natural gas, are burned to produce heat and power. The combustion of hydrocarbons with air results in the release of carbon dioxide as a constituent of fuel gas into the atmosphere. Illustratively, fuel gas from combustion of coal may contain around 15% (by volume) carbon dioxide along with water vapor, nitrogen and other components. While still significant, slightly lower carbon dioxide levels will generally be contained in fuel gas from combustion of petroleum liquids and natural gas as a result of their chemical makeup.

Another broad energy production area of applicability of the subject invention is the removal of carbon dioxide from natural gas and produced gas. As appreciated by those skilled in the art, natural gas as it is removed from the well may contain varying amounts of carbon dioxide depending upon the well and the methods of enhancing natural gas production. It may often be desirable to reduce the amount of carbon dioxide from the raw natural gas, for example, as a way of meeting heat content specifications.

Another example of applicability of the invention is upgrading of biogas into biomethane.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of producing sorbent granulates usable for separation of carbon dioxide from a carbon dioxide containing fluid mixture, the method comprising:
providing an amine functionalized sorbent material having amine groups chemically bound to the sorbent material surface;
grinding the sorbent material into a powder and
granulating the powder with added binder into sorbent granulates, wherein the sorbent granulates have a diameter in a range of 0.1-25 millimeter.

2. The method according to claim 1, wherein sorbent granulates are formed which have a diameter in range of 2-4 millimeter.

3. The method according to claim 1, wherein sorbent granulates are formed which have a diameter in range of 0.1-0.5 millimeter.

4. The method according to claim 1, 2 or 3, wherein the amine functionalized sorbent material is porous and has, prior to grinding, pores having sizes in a first range, and wherein the formed sorbent granulates have pores having sizes in the first range and pores having sizes in a second range, wherein sizes in the second range are larger than sizes in the first range.

5. The method according to claim 4, wherein sizes in the second range are at least ten times larger than sizes in the first range, preferably at least twenty times larger, more preferably at least thirty times larger.

6. The method according to any one of the preceding claims, wherein the first range is between 15-50 nanometer, preferably between 15-35 nanometer, and the second range is between 0.2-5 micrometer.

7. The method according to any one of the preceding claims, wherein the powder has particles having an average size in a range between 0.1-250 micrometer, preferably 1-200 micrometer, more preferably 5-150 micrometer, most preferably 20-100 micrometer.

8. The method according to any one of the preceding claims, wherein the amine functionalized resin is a crosslinked, macroporous, polystyrene based resin, preferably a benzyl amine-co-polystrene based resin.

9. The method according to any one of the preceding claims, wherein the binder is a polymer binder.

10. The method according to any one of the preceding claims, wherein the binder comprises aqueous polymer dispersions with film forming properties, such as acrylic, acrylic-styrene or vinylacetate dispersions.

11. A sorbent granulate for separation of carbon dioxide from a fluid mixture, the sorbent granulate comprising ground amine functionalized sorbent material having amine groups chemically bound to the sorbent material surface, wherein the sorbent material is interconnected by a binder, wherein the sorbent granules have a diameter in a range of 0.1-25 millimeter, and wherein the sorbent granulate comprises pores having sizes in a first range and pores having sizes in a second range, wherein sizes in the second range are at least ten times larger than sizes in the first range.

12. The sorbent granulate of claim 11, wherein the granulate comprises:
the sorbent material in an amount in a range of 85-99 dry weight percentage, preferably 90-98 dry weight percentage, more preferably 92-75.5 dry weight percentage, most preferably 93-96 dry weight percentage; and/or
the binder in an amount in a range of 1-15 dry weight percentage, preferably 2-10 dry weight percentage, more preferably 2.5-8 dry weight percentage,most preferably 4-7 dry weight percentage
wherein dry weight percentage is expressed with respect to the total weight of the sorbent granulate.

13. A packed bed or a fluidised bed of sorbent granulate which is obtained by performing the method according to any one of the claims 1-10, or the sorbent granulate according to claim 11or 12.

14. A method for removing carbon dioxide from a carbon dioxide containing fluid mixture, wherein sorbent granulate obtained by performing the method according to any one of the claims 1-10 is contacted with a fluid, preferably gas or gaseous stream comprising carbon dioxide resulting in the adsorption of a portion of the carbon dioxide from the fluid, preferably the gas or gaseous stream and, thereby, reducing the amount of carbon dioxide in the fluid, preferably the gas or gaseous stream.

15. A method according to claim 14, wherein the carbon dioxide containing gas stream is an industrial gas and/or industrial gas stream, preferably with a CO₂ partial pressure of above 0.5 kPa.
